# EUROPÄISCHE PATENTSCHRIFT

(11) **EP 2 286 393 B1**
(45) Veröffentlichungstag und Bekanntmachung des Hinweises auf die Patenterteilung: **23.11.2011**
(21) Anmeldenummer: 09757279.6
(22) Anmeldetag: 03.06.2009
(51) Int. Cl.: F16P 3/14

(54) **SICHERHEITSVORRICHTUNG UND VERFAHREN ZUR ÜBERWACHUNG EINES ÜBERWACHUNGSBEREICHS**
SAFETY APPARATUS AND METHOD FOR MONITORING A MONITORING AREA
DISPOSITIF DE SÉCURITÉ ET PROCÉDÉ POUR LA SURVEILLANCE D'UNE ZONE SURVEILLÉE

(30) Priorität: 03.06.2008 DE 102008026487
(43) Veröffentlichungstag der Anmeldung: 23.02.2011
(73) Patentinhaber: Cedes AG, 7302 Landquart (CH)
(72) Erfinder: DE COI, Beat, CH-7320 Sargans (CH)
(74) Vertreter: Grünecker, Kinkeldey, Stockmair & Schwanhäusser
(86) Internationale Anmeldenummer: PCT/EP2009/003960
(87) Internationale Veröffentlichungsnummer: WO 2009/146896

(56) Entgegenhaltungen:
- EP-A2- 0 747 865
- DE-A1- 19 938 639
- DE-A1-102005 063 217
- US-A- 4 993 049

## Beschreibung

Die Erfindung betrifft eine Sicherheitsvorrichtung sowie ein Verfahren zur Überwachung eines Überwachungsbereichs gemäß dem Oberbegriff des Anspruchs 1 bzw. 14.

### Stand der Technik

Sicherheitsvorrichtungen und Verfahren zur Überwachung von Überwachungsbereichen, in welchen eine Anlage aktiv ist, die eine Gefährdung für Personen darstellen kann, sind in unterschiedlichsten Ausführungsformen bereits bekannt geworden.

Beispielsweise stellen Industrieroboter eine große Gefahr für Personen dar. Sie bewegen sich schnell und rücksichtslos mit großer Wucht. Roboteranlagen werden deshalb mit Zäunen abgeschirmt. Die Roboter müssen aber zugänglich bleiben für z.B. Zufuhr von Material oder Wartungsarbeiten. Dazu werden Öffnungen im Zaun vorgesehen, die nur auf sichere Art und Weise einen Zutritt zum Gefahrenbereich ermöglichen.

Hierzu können die Öffnungen durch Lichtgitter überwacht werden. Die Anlage wird sofort stillgesetzt, sobald das Lichtgitter unterbrochen wird.

Es ist auch möglich, dass die Öffnungen mit Systemen ausgestattet sind, die Personen von einem Objekt unterscheiden können, damit kein unerlaubter Zutritt von Personen erfolgt, aber eine Materialzufuhr in den Gefahrenbereich stattfinden kann, ohne die Anlage stillsetzen zu müssen.

Für Wartungsarbeiten kann ein separater Zugang vorgesehen sein, der ebenfalls abgesichert ist.

Es sind Systeme bekannt, die ein Einschalten der Roboter nicht zulassen, wenn eine Person sich im abgeschirmten Bereich befindet. Dies wird z.B. erreicht, indem nur die Person, die die Anlage abgeschaltet hat, die Anlage auch wieder einschalten kann.

### Aufgabe und Vorteile der Erfindung

Der Erfindung liegt die Aufgabe zugrunde, ein Absicherungssystem für Überwachungsbereiche insbesondere Gefahrenbereiche, wie z.B. Roboterzellen, bereitzustellen, das eine vergleichsweise höhere Sicherheit bietet.

Diese Aufgabe wird durch die Merkmale des Anspruchs 1 sowie 14 gelöst.

In den abhängigen Ansprüchen sind vorteilhafte und zweckmäßige Weiterbildungen der Erfindung angegeben.

Zunächst geht die Erfindung von einer Sicherungsvorrichtung zur Überwachung eines Überwachungsbereichs aus, in welchem eine Anlage aktiv ist, die eine Gefährdung für Personen darstellen kann. Die Anlage kann z.B. mehrere Einrichtungen, z.B. Roboter umfassen. Im Weiteren sind Überwachungsmittel vorgesehen, die die Anlage, z.B. insbesondere alle aktiven Roboter abschalten, sobald eine Person den Überwachungsbereich betritt.

Der Kern der Erfindung liegt nun darin, dass eine Zählvorrichtung vorgesehen ist, die die Anzahl der Personen, die den Überwachungsbereich betreten und wieder verlassen, ausschließlich an einer Grenze des Überwachungsbereichs erfasst und dass Steuermittel vorgesehen sind, die mit der Zählvorrichtung in Verbindung stehen und ein Wiedereinschalten der Anlage im Überwachungsbereich erst dann wieder zulassen, wenn die von der Zählvorrichtung bestimmte Anzahl der Personen, die den Überwachungsbereich verlassen haben, gleich der Anzahl ist, die den Überwachungsbereich betreten haben.

Durch diese Maßnahme kann eine unsichere Situation vermieden werden, die entstehen kann, wenn beispielsweise zwei Wartungspersonen im Überwachungsbereich arbeiten. Eine Person könnte die Zelle verlassen und z.B. den Roboter einschalten. Erfindungsgemäß ist das nicht möglich, da erst beide Wartungspersonen den Überwachungsbereich verlassen müssen, um ein Wiedereinschalten der Anlage zu ermöglichen.

Diese Vorgehensweise hat den weiteren Vorteil, dass es nicht notwendig ist, die komplette Fläche des Überwachungsbereichs zu überwachen, um sicherzustellen, dass keine Personen sich im Überwachungsbereich befinden. Erfindungsgemäß ist es ausreichend, wenn Zugänge zum Überwachungsbereich auf die durchtretenden Personen hin bzw. der Perimeter also die Umgrenzung des Überwachungsbereichs überwacht wird. Je nach Anforderung kann ein Teilperimeter oder der vollständige Perimeter überwacht werden. Eine Gesamtfläche auf Personen hin zu überwachen, auf welcher Roboter und andere Einrichtungen sich befinden, hat den Nachteil, dass die Gegenstände im Überwachungsbereich das Sichtfeld von Sensoren abschatten können, wodurch noch im Überwachungsbereich sich befindende Personen sozusagen unsichtbar für die Sensoren sind. Erfindungsgemäß kann die von der Zählvorrichtung überwachte Fläche damit deutlich kleiner gehalten werden als der Überwachungsbereich. Denn er muss nicht der ganze Überwachungsbereich sensorisch überwacht werden.

Vorzugsweise beträgt das Verhältnis des Erfassungsbereichs der erfindungsgemäßen Zählvorrichtung zum Überwachungsbereich weniger als 1 zu 10, ggf. weniger 1 zu 100 oder sogar weniger als 1 zu 1000. Auch noch kleinere Verhältnisse sind denkbar. Damit sinkt der Überwachungsaufwand insbesondere bei großen Überwachungsbereichen.

Die Zählvorrichtung kann Teil der Überwachungsmittel sein, z.B. in der Form, dass Sensoren der Überwachungsmittel gleichzeitig zur Zählung von Personen genutzt werden, die den Überwachungsbereich betreten bzw. verlassen.

Die Überwachungsmittel sind vorzugsweise dazu ausgelegt, Personen zu identifizieren und festzustellen, in welche Richtung die Personen sich bewegen. Erfindungsgemäß wird die Anlage sofort abgestellt, wenn detektiert wird, dass eine Person den Überwachungsbereich betritt.

Die Zählvorrichtung ist vorzugsweise so ausgebildet, dass ein Zählvorgang von Personen stattfinden kann, ohne dass es erforderlich wäre, die Personen mit gesonderten Identifikationsmitteln auszustatten. Es ist vorzugsweise möglich, jede Person ohne weiteres zu detektieren und zu zählen, anhand von Merkmalen, die jede Person immanent besitzt.

In einer besonders bevorzugten Ausgestaltung der Erfindung sind die Steuermittel dazu ausgelegt, die Anlage automatisch in Gang zu setzen, sobald festgestellt, dass sich keine Personen mehr im Überwachungsbereich befindet. Dadurch kann die Anlage nach Wartungsarbeiten oder nach einem unbeabsichtigten Auslösen der Schutzvorrichtung so schnell wie möglich wieder in Betrieb genommen werden.

In einer besonders bevorzugten Ausgestaltung der Erfindung lassen die Steuermittel ein automatisches In-Gang-Setzen der Anlage nur zu, wenn über Identifikationsmittel die Person, die das Abschalten der Anlage ausgelöst hat, identifiziert ist. Damit kann überprüft werden, ob diese Person berechtigt ist, die Anlage anzuhalten. Sofern eine solche Überprüfung die Berechtigung der Person zeigt, ist es möglich, dass die Anlage automatisch wieder anläuft, sobald die Person den Überwachungsbereich verlässt. Vorzugsweise muss diese Person beim Verlassen des Überwachungsbereichs sich wiederum identifizieren, damit sicher ist, dass die Person den Bereich verlassen hat.

Für den Fall, dass zwei berechtigte Personen sich im Überwachungsbereich befinden, dann wird erfindungsgemäß sichergestellt, dass beide Personen richtig gezählt und beim Verlassen der Anlage erfasst werden, bevor eine Freigabe für einen Anlauf der Anlage erfolgen kann. Durch die zusätzliche Identifizierung von Personen, die den Überwachungsbereich betreten und wieder verlassen, können z.B. Wartungspersonen in den Überwachungsbereich ohne weiteres eintreten und diesen wieder verlassen. Andere Personen, die eine solche Identifizierung nicht aufweisen können, müssen z.B. sich die Anlage zuerst wieder freischalten lassen, bevor ein Wiederanlaufen stattfinden kann. Auf diese Weise wird für Personen, die sich nicht identifizieren können, kein Anreiz geschaffen, schnell etwas im Überwachungsbereich durchzuführen, da die Anlage ohne Identifizierung nicht automatisch wieder anläuft.

Im Weiteren ist es bevorzugt, wenn neben der Zählvorrichtung, die Personen ohne Identifikationsvorrichtung bzw. Kennung zählen kann, eine Identifikationszählvorrichtung vorgesehen ist. Das Zählen von Personen ist eine vergleichsweise komplexe Aufgabe. Da es in Sicherheitssystemen überaus wichtig ist, dass nie eine Person in einen gefährlichen Bereich gelangt, ohne dass sie gezählt wurde, kann ein derartiges Zusatzsystem mit Identifikation die Sicherheit so weit erhöhen, dass höchste Sicherheitskategorien erreicht werden können. Zur Identifikation können z.B. kontaktlose Systeme oder auch solche, die Kontakte benötigen, zur Anwendung kommen. Denkbar sind z.B. RFID-Tags, optische Codes (Barcodes), Magnetkarten, oder Mobiltelefone, um nur eine Auswahl von Möglichkeiten zu nennen. Drahtlose Möglichkeiten der Identifikation mit drahtlosen Kommunikationsmitteln sind besonders bevorzugt, da eine solche Art der Identifikation im Hintergrund sozusagen unbemerkt ablaufen kann.

In einer besonders vorteilhaften Ausgestaltung der Erfindung sind Identifikationsmittel vorgesehen, mit deren Hilfe eine Ortsbestimmung einer Person durchführbar ist. Z.B. wird die Position mittels einer Triangulation von RFID-Signalen ermittelt. Damit lässt sich eine erhöhte Sicherheit erreichen, wenn die Positionsdaten in Bezug zu den Daten der Überwachungsmittel gesetzt werden.

In einer im Weiteren bevorzugten Ausgestaltung der Erfindung sind die Steuermittel so ausgestaltet, dass ein Wieder-In-Gang-Setzen der Anlage nicht zugelassen wird, wenn nicht sicher ist, dass eine Zählung von Personen eindeutig erfolgt ist. Die Vorrichtung kann auch so konfiguriert werden, dass in einem Fall, in welchem eine Person gezählt wurde, aber nicht sicher ist, dass es lediglich eine war, zwei Personen angenommen werden. Beim Verlassen des Überwachungsbereichs müssen dann zwei Personen gezählt werden. War es tatsächlich dann nur eine Person, wird die Anlage nicht mehr anlaufen, ohne dass ein "Neustart" durchgeführt wird. Dadurch lassen sich unsichere Situationen verhindern.

Anstatt die Anlage nicht mehr freizugeben, falls Unsicherheiten in der Personenzählung bestehen (eine oder zwei Personen), und die Vorrichtung dann zwei Personen annimmt, kann zusätzlich ein Warnsignal ausgegeben werden, bei dessen Quittierung dann eine Zustimmung zu der Personenzahl stattfinden kann, wodurch sich ein unnötiger Stillstand der Anlage vermeiden lässt.

In einer überdies bevorzugten Ausgestaltung der Erfindung sind die Steuermittel dazu ausgelegt, ein Warnsignal auszugeben, wenn eine Person im Erfassungsbereich der Überwachungsmittel vor dem Betreten des Überwachungsbereichs nicht identifizierbar ist und/oder sich zu lange im Erfassungsbereich aufhält. Dadurch kann die Person realisieren, dass sie sich von der Gefahrenstelle wegbewegen sollte. Auf diese Weise kann vermieden werden, dass es zu einem Stillstand der Anlage kommt.

Eine Identifizierung kann durch gesonderte Identifizierungsmittel an der Person selber oder aber über eine Einrichtung erfolgen, die an der Person keine zusätzlichen Identifizierungsmittel verlangt.

Als Sensoren für die Überwachungsmittel, die ggf. auch zur Identifizierung eingesetzt werden können, lassen sich alle handelsübliche Sensoren verwenden, z.B. Triangulationssensoren, Sensoren, die auf der Grundlage einer Laufzeitmessung oder einer Phasenverschiebung arbeiten. Ebenso können Stereokameras, 3D- und 2D-Kameras, aktive und passive Infrarotsensoren zur Anwendung kommen. Die Auswahl der Sensoren ist vorzugsweise auf die einzuhaltende Sicherheitsnorm, und ggf. die Identifikationsaufgabe abzustimmen.

In einer überdies bevorzugten Ausgestaltung der Erfindung ist die Zählvorrichtung in der Lage, zwischen Personen und Objekten zu differenzieren.

Auf diese Weise kann z.B. Arbeitsmaterial in den Überwachungsbereich eingeführt werden, ohne dass die Steuermittel die Anlage abschalten. Werden Personen auf eine zusätzliche Identifikation überprüft, kann eine Unterscheidung im Hinblick auf Personen getroffen werden, die Arbeitsmaterial einführen dürfen und solche, die dazu nicht berechtigt sind.

Außerdem ist es bevorzugt, wenn die Überwachungsmittel mehrere Sensoren umfassen, dass die Steuermittel in der Lage sind, einen Gesamtüberwachungsbereich der Sensoren zu erfassen. Um eine große Fläche überwachen zu können, müssen regelmäßig mehrere Sensoren eingesetzt werden. Für eine sichere Überwachung sollten die Sensoren in der Lage sein, den Perimeter des Überwachungsbereichs soweit erforderlich, weil ein freier Zugang möglich wäre, lückenlos zu erfassen. Vorzugsweise sollte die Vorrichtung dann in der Lage sein, selbst zu erkennen, wenn Lücken in der Überwachung vorhanden sind. Auch Abschattungen können zu unerwünschten Fehlstellen in der Überwachung führen. Um dies zu vermeiden, können die Sensoren z.B. an die Steuermittel Überwachungsdaten, z.B. Bilder übermitteln, um eine Überprüfung vorzunehmen, ob sich die Erfassungsbereiche ausreichend genug überlappen.

Durch diese Maßnahme lässt sich eine Inbetriebnahme der Sicherheitsvorrichtung deutlich erleichtern. Durch einen wiederholten Prüfablauf in dieser Art kann darüber hinaus sichergestellt werden, dass die Überwachung im Laufe der Zeit keine "Schlupflöcher" enthält.

Eine Überlappungsüberprüfung kann z.B. wie folgt stattfinden. Sensoren erfassen die Signale von anderen Sensoren im Überwachungsbereich, um so zu ermitteln, ob die Überwachungsbereiche benachbarter Sensoren in ausreichendem Maße so anschließen, dass keine Lücken vorliegen. Die Information eines lückenlosen Anschlusses von Nachbarsensoren kann an die Steuermittel weitergegeben werden, die die Anlage erst freigeben, wenn sie von allen Sensoren eine entsprechende Bestätigung erhalten haben. Es ist auch denkbar, dass auf allen Sensoren ein Algorithmus läuft, der nur dann, wenn alle Sensoren auf richtige Art und Weise zu ihren Nachbarn angeordnet sind, ein Eingeschalten der Anlage zulässt. Es können z.B. Anzeigemittel vorgesehen sein, die einem Anwender mitteilen, welche Sensoren nicht richtig zu ihren Nachbarn positioniert sind.

Auf diese Weise lässt sich einfach feststellen, ob der Perimeter des Überwachungsbereichs komplett erfasst ist, und wenn nicht, wo Lücken bestehen.

In einer überdies bevorzugten Ausgestaltung sind mehrere Sensoren der Überwachungsmittel in der Lage, miteinander zu kommunizieren. Auf diese Weise lassen sich z.B. Störszenarien zwischen den Sensoren erkennen und ausschließen.

Die Sensoren können auch hierarchisch angeordnet werden. Beispielsweise wird der Perimeter von einem Slave überwacht, der in Verbindung zu einem Master steht. Der Master entscheidet dann, ob die Anlage abgesichert ist, und/oder ob sie anlaufen kann. Der Master besitzt vorzugsweise einen Ausgang, mit welchem sich die Anlage steuern lässt. Vorzugsweise arbeiten mehrere Slaves mit einem Master zusammen. Das hat den Vorteil, dass ein teurer Master zu Steuerung eingesetzt werden kann, der mit kostengünstigeren Slaves zusammenarbeitet.

In einer weiteren vorteilhaften Ausgestaltung der Erfindung sind die Sensoren redundant ausgeführt, um entsprechende Sicherheitskriterien erfüllen zu können.

Vorzugsweise werden die Sensoren der Überwachungsmittel an die jeweiligen Anforderungen angepasst. Sie können parametriert werden hinsichtlich der Größe des Erfassungsbereichs, minimale und maximale erfassbare Geschwindigkeit, Auflösung, Warn-Alarmzonen, Verweildauer bis ein Warnsignal ausgegeben wird, um nur eine Auswahl von Möglichkeiten zu nennen.

In einer darüber hinaus vorteilhaften Ausgestaltung der Erfindung weisen die Überwachungsmittel wenigstens einen Sensor auf, der in der Lage ist, eine Person anhand des Kopfes und/oder der Schultern und/oder der Füße und/oder der Beine zu erfassen.

Werden die vorgegebenen Merkmale nicht erkannt, liegt keine zuverlässige Personenzählung vor, wodurch die Vorrichtung vorgegebene Maßnahmen einleitet.

Durch die erfindungsgemäße Vorgehensweise sind verschiedenste Bereiche überwachbar, z.B. Antriebe, Aufzüge, Maschinen und auch für Personen an sich sichere Bereiche, wie z.B. Banken. In einem solchen Fall wird normalerweise keine Anlage abgeschaltet, wenn ein Bereich betreten wird, sondern es wird vorzugsweise überwacht, wie lange sich eine Person in einem Bereich aufhält. Dadurch kann festgestellt werden, ob sich eine Person einschließen lässt oder prinzipiell zu lange in einem überwachten Bereich befindet. Grundsätzlich kann damit Personen Zugang zu einem Bereich gewährt werden, in welchem sie sich nur eine vorgegebene Zeit aufhalten dürfen. Indem mehrere überwachte Bereiche definiert werden, kann eine Bewegung von Personen durch Räume eines Gebäudes kontrolliert werden.

Außerdem vorteilhaft ist es, dass Zutrittsmittel vorgesehen sind, die nur einer Person den Zutritt zum Überwachungsbereich erlauben. In vielen Bereichen ist es erwünscht, dass nur eine Person zur gleichen Zeit den Bereich betreten kann. Eine Ampel oder Schranke kann eine sichere Vereinzelung nicht vornehmen. Durch die erfindungsgemäße Vorgehensweise über die Zählung der Personen lässt sich dies realisieren.

### Zeichnungen

Mehrere Ausführungsbeispiele der Erfindung sind in den Zeichnungen dargestellt und werden nachstehend unter Angabe weiterer Vorteile und Einzelheiten näher erläutert.

Es zeigen
- Figur 1 und 2: in einer Draufsicht jeweils drei Roboter in einer Roboterzelle mit angedeuteten Überwachungsbereichen der Sensoren zur Erfassung eines vollständigen Perimeters und
- Figur 3: in einer schematischen Draufsicht in bekannter Weise drei Roboter in einer Roboterzelle, die von einem Zaun umgeben ist.

### Beschreibung der Ausführungsbeispiele

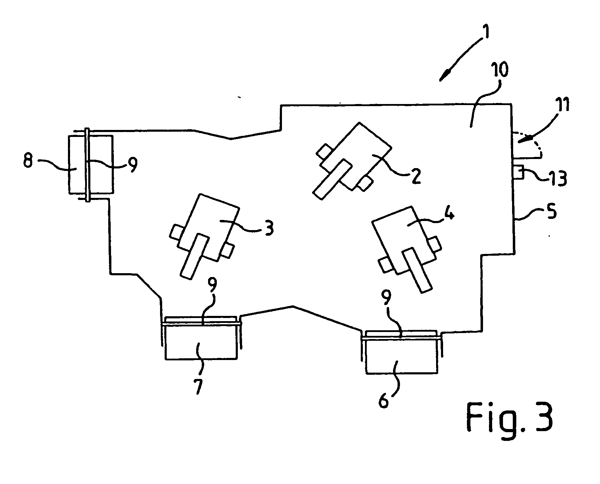

In Figur 3 ist eine aus dem Stand der Technik bekannte Roboterzelle 1 mit drei Robotern 2, 3, 4 dargestellt. Die Roboterzelle 1 ist von einem Zaun 5 umgeben. Der Zaun 5 hat drei Zugänge 6, 7, 8, über welche eine Materialzufuhr stattfinden kann. Die Zugänge 6, 7, 8 werden z.B. jeweils von einem Lichtgitter 9 überwacht. Das Lichtgitter 9 ist in der Lage zu überwachen, ob nur Material in die Roboterzelle 1 eingeführt wird und nicht in etwa Personen sich so einen Zutritt zu einem Gefahrenbereich 10 verschaffen. Ober einen Wartungseingang 11 kann ordnungsgemäß Zutritt zum Gefahrenbereich 10 erlangt werden. Neben einer Tür 12 des Wartungseingangs 11 ist eine Vorrichtung 13 vorgesehen, um die Zutrittsberechtigung von Personen zu prüfen.

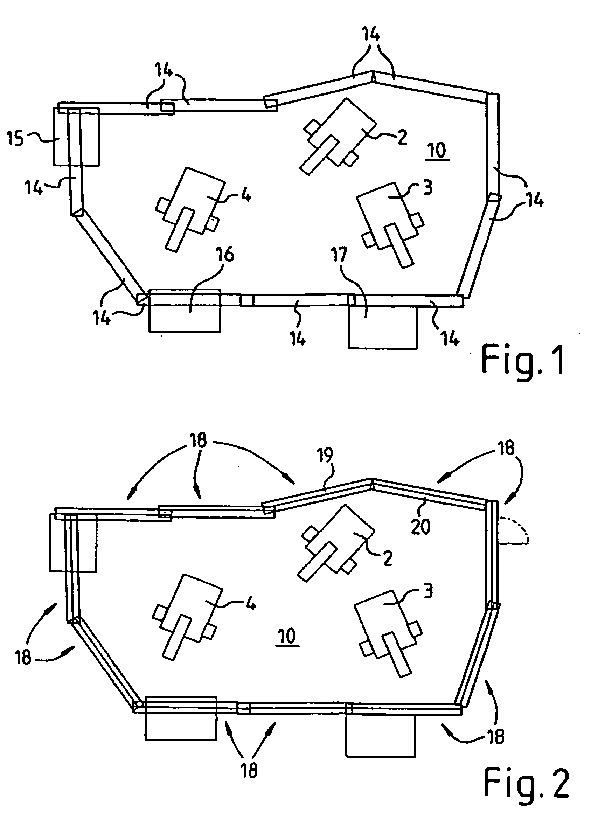

In Figur 1 weist der Gefahrenbereich 10 der Roboter 2, 3, 4 keine Umrandung mehr durch einen Zaun 5 auf. Der ganze Gefahrenbereich 10 wird erfindungsgemäß von Sensoren (nicht dargestellt) überwacht, die den Perimeter des Bereichs 10 kontrollieren. In Figur 1 schematisch gezeigt sind lediglich die Erfassungsbereiche 14 der Sensoren. Die Erfassungsbereiche überlappen sich derart, dass Personen nicht unbemerkt in den Gefahrenbereich 10 gelangen können. An Stellen 15, 16, 17, wo Material in die Roboterzelle eingeführt werden soll, sind die Sensoren dazu ausgelegt, Material von Personen unterscheiden zu können.

Da Jedermann überall Zutritt zum Gefahrenbereich 10 erlangen kann, ist ein Wartungseingang nicht mehr erforderlich. Sobald sichergestellt ist, dass keine Personen sich im Gefahrenbereich 10 befinden, wird die Anlage, also die Roboter 2, 3, 4 automatisch freigegeben. Aus diesem Grund ist es unbedingt erforderlich, dass die Sensoren in der Lage sind, eine sichere Zählung von Personen durchzuführen, die den Gefahrenbereich betreten und diesen wieder verlassen.

Die Überwachung des Gefahrenbereichs 10 der Roboterzelle in Figur 2 unterscheidet sich zu der Überwachung nach Figur 1 dadurch, dass Erfassungsbereiche 18 der Sensoren zweigeteilt sind. Ein äußerer Teil 19 generiert ein Warnsignal, wenn eine Person nicht richtig gezählt werden kann oder sich zu lange in diesem Erfassungsbereich aufhält. Gelangt die Person in einen inneren Erfassungsbereich 20, führt dies zum sofortigen Anhalten der Roboter 2, 3, 4.

### Bezugszeichenliste:

- 1: Roboterzelle
- 2: Roboter
- 3: Roboter
- 4: Roboter
- 5: Zaun
- 6: Zugang
- 7: Zugang
- 8: Zugang
- 9: Lichtgitter
- 10: Gefahrenbereich
- 11: Wartungseingang
- 12: Tür
- 13: Vorrichtung
- 14: Erfassungsbereich
- 15: Stelle
- 16: Stelle
- 17: Stelle
- 18: Erfassungsbereich
- 19: äußerer Bereich
- 20: innerer Bereich

## Patentansprüche

1. Sicherheitsvorrichtung zur Überwachung eines Überwachungsbereichs (10), in welchem eine Anlage (2, 3, 4) aktiv ist, die eine Gefährdung für Personen darstellen kann, wobei Überwachungsmittel vorgesehen sind, die die Anlage (2, 3, 4) abschalten, sobald eine Person den Überwachungsbereich (10) betritt, **dadurch gekennzeichnet, dass** eine Zählvorrichtung vorgesehen ist, die die Anzahl der Personen, die den Überwachungsbereich (10) betreten und wieder verlassen, ausschließlich an einer Grenze des Überwachungsbereichs erfasst und dass Steuermittel vorgesehen sind, die mit der Zählvorrichtung in Verbindung stehen und ein Wiedereinschalten der Anlage im Überwachungsbereich (10) erst dann wieder zulassen, wenn die von der Zählvorrichtung bestimmte Anzahl von Personen, die den Überwachungsbereich (10) verlassen haben, gleich der Anzahl von Personen ist, die den Überwachungsbereich (10) betreten haben.

2. Vorrichtung nach Anspruch 1, **dadurch gekennzeichnet, dass** die Steuermittel dazu ausgelegt sind, die Anlage (2, 3, 4) automatisch in Gang zu setzen, sobald festgestellt ist, dass sich keine Person mehr im Überwachungsbereich (10) befindet.

3. Vorrichtung nach einem der vorhergehenden Ansprüche, **dadurch gekennzeichnet, dass** die Steuermittel ein automatisches In-Gang-Setzen der Anlage (2, 3, 4) nur zulassen, wenn über Identifikationsmittel die Person, die das Abschalten der Anlage ausgelöst hat, identifiziert ist.

4. Vorrichtung nach einem der vorhergehenden Ansprüche, **dadurch gekennzeichnet, dass** neben der Zählvorrichtung, die Personen ohne Identifikationsvorrichtung zählen kann, eine Identifikationszählvorrichtung vorgesehen ist.

5. Vorrichtung nach einem der vorhergehenden Ansprüche, **dadurch gekennzeichnet, dass** die Steuermittel so ausgebildet sind, dass ein In-Gang-Setzen der Anlage (2, 3, 4) nicht zugelassen wird, wenn nicht sicher ist, dass eine Zählung der Personen eindeutig richtig erfolgt ist.

6. Vorrichtung nach einem der vorhergehenden Ansprüche, **dadurch gekennzeichnet, dass** die Steuermittel dazu ausgebildet sind, ein Warnsignal auszugeben, wenn eine Person im Erfassungsbereich (18) der Überwachungsmittel vor dem Betreten des Überwachungsbereichs (10) nicht identifizierbar ist.

7. Vorrichtung nach einem der vorhergehenden Ansprüche, **dadurch gekennzeichnet, dass** die Steuermittel dazu ausgebildet sind, ein Warnsignal auszugeben, wenn eine Person im Erfassungsbereich der Überwachungsmittel vor dem Betreten des Überwachungsbereichs sich zu lange im Erfassungsbereich (19) aufhält.

8. Vorrichtung nach einem der vorhergehenden Ansprüche, **dadurch gekennzeichnet, dass** die Zählvorrichtung in der Lage ist, Personen und Objekte zu differenzieren.

9. Vorrichtung nach einem der vorhergehenden Ansprüche, **dadurch gekennzeichnet, dass**, wenn die Überwachungsmittel mehrere Sensoren umfassen, die Steuermittel in der Lage sind, einen Gesamtüberwachungsbereich der Sensoren zu erfassen.

10. Vorrichtung nach einem der vorhergehenden Ansprüche, **dadurch gekennzeichnet, dass** mehrere Sensoren der Überwachungsmittel in der Lage sind, miteinander zu kommunizieren.

11. Vorrichtung nach einem der vorhergehenden Ansprüche, **dadurch gekennzeichnet, dass** die Überwachungsmittel redundante Sensoren zur Überwachung aufweisen.

12. Vorrichtung nach einem der vorhergehenden Ansprüche, **dadurch gekennzeichnet, dass** die Überwachungsmittel wenigstens einen Sensor aufweisen, der in der Lage ist, eine Person anhand von Kopf und/oder Schultern und/oder Füßen und/oder Beinen zu erkennen.

13. Vorrichtung nach einem der vorhergehenden Ansprüche, **dadurch gekennzeichnet, dass** Zutrittsmittel vorgesehen sind, die nur eine Person im Überwachungsbereich zulassen.

14. Verfahren zur Überwachung eines Überwachungsbereichs (10), in welchem eine Anlage (2, 3, 4) aktiv ist, die insbesondere eine Gefährdung für Personen darstellen kann, wobei die Anlage (2, 3, 4) abgeschaltet wird, sobald eine Person den Überwachungsbereich (10) betritt, **dadurch gekennzeichnet, dass** mittels einer Zählvorrichtung die Anzahl der Personen bestimmt wird, die den Überwachungsbereich (10) betreten und dass mittels der Zählvorrichtung die Anzahl von Personen erfasst wird, die den Überwachungsbereich (10) verlassen, wobei ein Wiedereinschalten der Anlage (2, 3, 4) im Überwachungsbereich (10) erst dann freigegeben wird, wenn die Anzahl der Personen, die den Überwachungsbereich (10) verlassen hat, gleich der Anzahl der Personen ist, die den Überwachungsbereich (10) betreten haben.

## Claims

1. Safety apparatus for monitoring a monitoring area (10) in which an installation (2, 3, 4) is active which can present a risk to people, wherein monitoring means are provided which shut down the installation (2, 3, 4) as soon as a person enters the monitoring area (10), **characterized in that** a counting apparatus is provided which detects the number of people who enter the monitoring area (10) and leave it again exclusively at a border for the monitoring area and **in that** control means are provided which are in contact with the counting apparatus and permit the installation in the monitoring area (10) to be switched on again only if the number of people who have left the monitoring area (10), as determined by the counting apparatus, is the same as the number of people who entered the monitoring area (10).

2. Apparatus according to Claim 1, **characterized in that** the control means are designed to start up the installation (2, 3, 4) automatically as soon as it is established that there is no longer any person in the monitoring area (10).

3. Apparatus according to one of the preceding claims, **characterized in that** the control means permits automatic startup of the installation (2, 3, 4) only if identification means have been used to identify the person who triggered shutdown of the installation.

4. Apparatus according to one of the preceding claims, **characterized in that** besides the counting apparatus, which can count people without an identification apparatus, an identification counting apparatus is provided.

5. Apparatus according to one of the preceding claims, **characterized in that** the control means are designed such that startup of the installation (2, 3, 4) is not permitted if it is uncertain that counting of the people has unequivocally taken place correctly.

6. Apparatus according to one of the preceding claims, **characterized in that** the control means are designed to output a warning signal if a person in the capture range (18) of the monitoring means cannot be identified before entering the monitoring area (10).

7. Apparatus according to one of the preceding claims, **characterized in that** the control means are designed to output a warning signal if a person in the capture range of the monitoring means stays too long in the capture range (19) before entering the monitoring area.

8. Apparatus according to one of the preceding claims, **characterized in that** the counting apparatus is capable of distinguishing people and objects.

9. Apparatus according to one of the preceding claims, **characterized in that** if the monitoring means comprise a plurality of sensors, the control means are capable of capturing an overall monitoring area for the sensors.

10. Apparatus according to one of the preceding claims, **characterized in that** a plurality of sensors of the monitoring means are capable of communicating with one another.

11. Apparatus according to one of the preceding claims, **characterized in that** the monitoring means have redundant sensors for monitoring.

12. Apparatus according to one of the preceding claims, **characterized in that** the monitoring means have at least one sensor which is capable of recognizing a person from his head and/or shoulders and/or feet and/or legs.

13. Apparatus according to one of the preceding claims, **characterized in that** admission means are provided which permit only one person in a monitoring area.

14. Method for monitoring a monitoring area (10) in which an installation (2, 3, 4) is active which, in particular, can present a risk to people, wherein the installation (2, 3, 4) is shut down as soon as a person enters the monitoring area (10), **characterized in that** a counting apparatus is used to determine the number of people who enter the monitoring area (10) and **in that** the counting apparatus is used to detect the number of people who leave the monitoring area (10), wherein the installation (2, 3, 4) in the monitoring area (10) is cleared to be switched on again only if the number of people who have left the monitoring area (10) is the same as the number of people who entered the monitoring area (10).

## Revendications

1. Dispositif de sécurité pour la surveillance d'une zone surveillée (10), dans laquelle une installation (2, 3, 4) est active, laquelle peut constituer un danger pour des personnes, des moyens de surveillance étant prévus, lesquels arrêtent l'installation (2, 3, 4), dès qu'une personne entre dans la zone surveillée (10), **caractérisé en ce qu'**un dispositif de comptage est prévu, lequel détecte le nombre des personnes qui sont entrées dans la zone surveillée (10) et l'ont à nouveau quittée, exclusivement au niveau d'une limite de la zone surveillée et **en ce que** des moyens de commande sont prévus, lesquels sont en liaison avec le dispositif de comptage et autorisent une reconnexion de l'installation dans la zone surveillée (10) seulement si le nombre de personnes déterminé par le dispositif de comptage qui ont quitté la zone surveillée (10) est égal au nombre de personnes qui sont entrées dans la zone surveillée (10).

2. Dispositif selon la revendication 1, **caractérisé en ce que** les moyens de commande sont conçus pour mettre en route l'installation (2, 3, 4) automatiquement dès qu'il est constaté qu'il n'y a plus personne dans la zone surveillée (10).

3. Dispositif selon l'une quelconque des revendications précédentes, **caractérisé en ce que** les moyens de commande ne permettent une remise en marche automatique de l'installation (2, 3, 4) que si la personne qui a déclenché la coupure de l'installation est identifiée par le biais de moyens d'identification.

4. Dispositif selon l'une quelconque des revendications précédentes, **caractérisé en ce que**, en plus du dispositif de comptage, qui peut compter les personnes sans dispositif d'identification, il est prévu un dispositif de comptage avec identification.

5. Dispositif selon l'une quelconque des revendications précédentes, **caractérisé en ce que** les moyens de commande sont réalisés de telle sorte qu'une mise en marche de l'installation (2, 3, 4) ne soit pas autorisée s'il n'est pas certain qu'un comptage des personnes a été effectué absolument correctement.

6. Dispositif selon l'une quelconque des revendications précédentes, **caractérisé en ce que** les moyens de commande sont réalisés pour émettre un signal d'alarme si une personne dans la zone de détection (18) des moyens de surveillance ne peut pas être identifiée avant l'entrée dans la zone surveillée (10).

7. Dispositif selon l'une quelconque des revendications précédentes, **caractérisé en ce que** les moyens de commande sont réalisés de manière à émettre un signal d'alarme si une personne dans la zone de détection des moyens de surveillance reste trop longtemps dans la zone de détection (19) avant d'entrer dans la zone surveillée.

8. Dispositif selon l'une quelconque des revendications précédentes, **caractérisé en ce que** le dispositif de comptage est en mesure de différencier des personnes et des objets.

9. Dispositif selon l'une quelconque des revendications précédentes, **caractérisé en ce que**, lorsque les moyens de surveillance comprennent plusieurs capteurs, les moyens de commande sont en mesure de détecter une zone surveillée totale des capteurs.

10. Dispositif selon l'une quelconque des revendications précédentes, **caractérisé en ce que** plusieurs capteurs des moyens de surveillance sont en mesure de communiquer les uns avec les autres.

11. Dispositif selon l'une quelconque des revendications précédentes, **caractérisé en ce que** les moyens de surveillance présentent des capteurs redondants pour la surveillance.

12. Dispositif selon l'une quelconque des revendications précédentes, **caractérisé en ce que** les moyens de surveillance présentent au moins un capteur qui est en mesure de reconnaître une personne par sa tête et/ou ses épaules et/ou ses pieds et/ou ses jambes.

13. Dispositif selon l'une quelconque des revendications précédentes, **caractérisé en ce que** des moyens d'accès sont prévus, lesquels n'autorisent qu'une seule personne dans la zone surveillée.

14. Procédé pour surveiller une zone surveillée (10), dans lequel une installation (2, 3, 4) est active, laquelle peut notamment constituer un danger pour des personnes, l'installation (2, 3, 4) étant arrêtée dès qu'une personne entre dans la zone surveillée (10), **caractérisé en ce qu'**au moyen d'un dispositif de comptage, on détermine le nombre des personnes qui sont entrées dans la zone surveillée (10) et **en ce qu'**au moyen du dispositif de comptage, on détermine le nombre de personnes qui sont sorties de la zone surveillée (10), une remise en marche de l'installation (2, 3, 4) dans la zone surveillée (10) étant autorisée seulement si le nombre de personnes de comptage qui ont quitté la zone surveillée (10) est égal au nombre de personnes qui sont entrées dans la zone surveillée (10).
